# EUROPÄISCHE PATENTSCHRIFT

(11) **EP 0 749 463 B1**
(45) Veröffentlichungstag und Bekanntmachung des Hinweises auf die Patenterteilung: **13.05.1998**
(21) Anmeldenummer: 95912185.6
(22) Anmeldetag: 02.03.1995
(51) Int. Cl.: C09J 177/08, C09J 177/06, C09J 177/00, C08K 3/26, C08G 69/34

(54) **POLYAMID-SCHMELZKLEBSTOFF**
POLYAMIDE HOT-MELT-TYPE ADHESIVE
COLLE A FUSION EN POLYAMIDE

(30) Priorität: 11.03.1994 DE 4408277
(43) Veröffentlichungstag der Anmeldung: 27.12.1996
(73) Patentinhaber: Henkel Kommanditgesellschaft auf Aktien, 40191 Düsseldorf (DE)
(72) Erfinder: HEUCHER, Reimar, D-50259 Pulheim (DE); KOPANNIA, Siegfried, D-47809 Krefeld (DE); MAASSEN, Ulrike, D-41470 Neuss (DE)
(86) Internationale Anmeldenummer: EP9500757
(87) Internationale Veröffentlichungsnummer: WO9524450

(56) Entgegenhaltungen:
- WO-A-93/20166
- DE-A- 2 552 518
- FR-A- 1 411 568
- FR-A- 2 253 812
- DATABASE WPI Section Ch, Week 8025, Derwent Publications Ltd., London, GB; Class A32, AN 80-44358C & JP,A,55 063 223 (MITSUBISHI PLASTICS IND) 14. Mai 1980
- PATENT ABSTRACTS OF JAPAN vol. 006, no. 127 (C-113) 13. Juli 1982 & JP,A,57 053 579 (DAINIPPON INK & CHEM INC) 30. März 1982

## Beschreibung

Die Erfindung betrifft einen Polyamid-Schmelzklebstoff mit Füllstoffen sowie seine Verwendung.

Polyamid-Schmelzklebstoffe mit Füllstoffen sind bekannt. So wird in der DE 23 61 486 ein Schmelzklebstoff beschrieben, der aus einem Polyamidharz und aus 5 bis 80 Gew.-% eines anorganischen Füllstoffes besteht. Das Polyamidharz wird aus 0,5 bis 0,8 Äquivalenten einer polymeren Fettsäure, 0,2 bis 0,5 Äquivalenten einer weiteren Dicarbonsäure, 0 bis 0,6 Äquivalenten an Ethylendiamin und 0,4 bis 1,0 Äquivalenten an Piperazin hergestellt, wobei das Äquivalenzverhältnis von Carbonsäuren und Diaminen etwa gleich groß sein soll. In den 5 Beispielen werden ausschließlich Polyamide beschrieben, in denen die Säurezahl größer als die Aminzahl ist, und zwar um mindestens 2 Einheiten. Als anorganische Füllstoffe werden Kreide und Schwerspat genannt (siehe Beispiele sowie Seite 2, Absatz 4). Der Polyamid-Schmelzklebstoff soll als Kantenleim für wärmestandfeste Kantenverleimungen verwendet werden. Als Kantenmaterialien kommen Furniere aus Holz, Melaminformaldehyd-bzw. Harnstoff-Formaldehyd-Harze, Polyester sowie Polyvinylchlorid und Poly-Acrylnitril-Butadien-Styrol in Frage. Diese Kantenmaterialien werden mit Möbelplatten verklebt.

Auch aus der Firmenschrift "Eurelon" der Firma Schering AG sind Polyamid-Schmelzklebstoffe mit Füllstoffen bekannt. Unter den 15 beschriebenen Typen ist ein Type mit einer höheren Aminzahl als Säurezahl. Alle anderen Typen haben entweder praktisch gleiche Zahlen oder die Säurezahl ist höher. Diese Polyamidharze können in der Schmelze mit anorganischen Füllstoffen wie Kreide, Schwerspat, Kaolin oder Aluminiumoxid versetzt werden. Wegen der zum Teil relativ niedrigen Schmelzviskosität der Harze sollte leichten, wenig zum Sedimentieren neigenden Füllstoffen der Vorzug gegeben werden, um das Absetzen des Füllstoffes während der Verarbeitung des Schmelzklebstoffes möglichst zu vermeiden. Das Zumischen von Füllstoffen wird empfohlen, wenn bei der Verklebung von porösen Werkstoffen ein zu dünnflüssiger Klebstoff so stark in das Substrat eindringt, daß die eigentliche Klebfuge nur aus einem hauchdünnen Film besteht. Die zu verklebenden Flächen sollen nicht nur entfettet werden, sondern es ist in den meisten Fällen zusätzlich erforderlich, z.B. bei Metallen störende Oxid- oder Zunderschichten durch mechanisches Aufrauhen oder Beizen zu entfernen oder bei Kunststoffen mit unpolaren Oberflächen diese durch eine chemische Vorbehandlung in einen polaren Zustand zu überführen. Es können folgende Werkstoffe verklebt werden: Aluminium und Aluminiumlegierungen, Stahl und nicht rostender Stahl, Magnesium und Magnesiumlegierungen, keramische Werkstoffe, Glas und Porzellan, Beton und Asbestzement, Polyethylen, Polypropylen, Polyamide, Schaumstoffe, Leder und Gummi, Natur- und Synthesekautschuk sowie verschiedene Werkstoffe wie duroplastische Kunststoffe, PVC-Hart, Polystyrol, Polyacrylate, Polycarbonate und Polyacetate. Die Schmelzklebstoffe werden nicht nur in der Schuhindustrie, Möbel industrie, Autoindustrie und Verpackungs- bzw. Emballagen-Industrie, sondern auch in der Elektro-Industrie angewendet. Dort u.a. zum Abkleben von Spulenenden und Spulenwicklungen, bei der Verklebung von Gehäusen sowie bei der Anbringung von Zierblenden usw.

Die DE 42 11 125 beschreibt Polyamid-Schmelzklebstoffe, die 0,5 bis 2 Gew.-% an Füllstoffen enthalten können. Konkrete Angaben zu der Art der Füllstoffe werden nicht gemacht. Die Polyamide können sowohl säure- als auch aminterminiert sein. In den Beispielen werden aminterminierte Polyamide eingesetzt. Die Schmelzklebstoffe werden zum Verkleben von unvorbehandelten Polyethylen und Polyvinylchlorid oder Metallen, insbesondere Kupfer, Blei und Aluminium miteinander oder mit sich selbst verwendet. Konkrete Anwendungen liegen im Bereich der Elektro-Industrie, insbesondere beim Verbinden von Kabeln und Leitungen.

Aufgabe der Erfindung war es, die Festigkeiten der Metallverklebungen im Bereich der Elektro-Industrie zu verbessern.

Die erfindungsgemäße Lösung ist den Patentansprüchen zu entnehmen. Sie besteht im wesentlichen in der Auswahl von 2 Komponenten: Das Polyamid soll eine höhere Amin- als Säure-Zahl haben und der Füllstoff soll ein Carbonat sein.

Der erfindungsgemäße Schmelzklebstoff enthält als wesentliche Komponente ein Polyamid auf der Basis von dimerisierter Fettsäure. "Dimerisierte Fettsäuren" werden durch Kupplung von ungesättigten langkettigen einbasischen Fettsäuren, z.B. Linolensäure, Ölsäure, erhalten. Sie ist ein Gemisch vieler Isomerer (siehe R.F. Paschke, L.E. Peterson und D.H. Wheeler, Journal of the American Oil Chemists' Society, 41, 723 (1964). Selbstverständlich können auch Trimere und weitere Oligomere in geringem Maße enthalten sein. Die Säuren sind seit langem bekannt und im Handel erhältlich.

Die erfindungsgemäßen Polyamide sind vorzugsweise folgendermaßen zusammengesetzt:
- 35 bis 49,5 Mol-% dimerisierte Fettsäure sowie
- 0,5 bis 15 Mol-% monomere Fettsäure mit 12 bis 22 C-Atomen und
- 2 bis 35 Mol-% Polyetherdiamine der allgemeinen Formel

   H₂N - R₁ - 0 - (R₂0)ₓ - R₃ - NH₂, (I)

   in der
   - x: eine Zahl zwischen 8 und 80, vornehmlich zwischen 8 und 40,
   - R₁ und R₃: gleiche oder verschiedene aliphatische und/oder cycloaliphatische Kohlenwasserstoffreste mit vorzugsweise 2 bis 8 C-Atomen
   - R₂: einen gegebenenfalls verzweigten aliphatischen Kohlenwasserstoffrest mit 1 bis 6 Kohlenstoffatomen darstellt,
   sowie
- 15 bis 48 Mol-% aliphatische Diamine mit 2 bis 40 Kohlenstoffatomen,
   wobei die dimerisierten Fettsäuren bis zu 2/3 durch aliphatische Dicarbonsäuren mit 4 bis 12 Kohlenstoffatomen ersetzt werden können.

Es ist aber auch günstig, ein Polyamid einzusetzen, welches erhalten wurde aus:
- 20 bis 49,5 Mol-% dimerisierter Fettsäure sowie
- 0,5 bis 15 Mol-% monomere Fettsäure mit 12 bis 22 C-Atomen und
- 20 bis 55 Mol-% eines wenigstens 2 primäre Aminogruppen tragenden Amins mit 2 bis 40 C-Atomen,
wobei die dimerisierten Fettsäuren bis zu 2/3 durch aliphatische Dicarbonsäuren mit 4 bis 12 Kohlenstoffatomen ersetzt sein können.

Die erfindungsgemäß eingesetzten Polyamide können darüber hinaus noch weitere in Schmelzklebern gängige Rohstoffe enthalten. So sind insbesondere aliphatische Dicarbonsäuren gebräuchlich. Geeignete aliphatische Carbonsäuren weisen vorzugsweise 4 bis 12 C-Atome auf. So sind beispielsweise Glutarsäure, Maleinsäure, Bernsteinsäure, Adipinsäure, Pimelinsäure, Korksäure oder auch Sebacinsäure geeignet. Durch diese Säuren kann die Dimerfettsäure molmäßig bis zu 2/3 ersetzt werden. Dabei ist es dem Fachmann bekannt, daß durch Zusatz von Sebacinsäure der Schmelzpunkt der Polyamide in gewissen Grenzen erhöht werden kann. Weitere im Schmelzkleber mögliche Rohstoffe sind langkettige Aminocarbonsäuren wie 11-Aminoundecansäure oder auch Lauryllactam. In kleinen Mengen können auch die in der Faserchemie bekannten Polyamid-Rohstoffe wie beispielsweise Caprolactam eingesetzt werden. Diese Stoffe erlauben es dem Fachmann, den Schmelzpunkt in gewissen Grenzen zu erhöhen.

Bezüglich der Aminkomponenten in den Polyamiden ist auszuführen, daß hier Polyetherpolyole mit primären Aminoendgruppen bevorzugt sind. Geeignete Polyetherpolyole mit Aminoendgruppen basieren auf Polyethylenglykol, Polypropylenglykol oder Polytetrahydrofuran. Dabei sind Polyetherpolyole mit Aminoendgruppen bevorzugt, die nicht oder nur geringfügig wasserlöslich sind. Die eingesetzten Polyetherpolyole mit Aminoendgruppen weisen Molekulargewichte zwischen 700 und 3 500 oder auch zwischen 1 200 und 2 500 auf. Eine besonders geeignete Rohstoffklasse sind beispielsweise die Bis-(3-aminopropyl)-polytetrahydrofurane eines Molekulargewichts zwischen 700 und 3 500 oder die Bis-(2-aminopropyl)-polyoxypropylene eines Molekulargewichts zwischen 1 200 und 2 500. Weiterhin können auch primäre lineare Alkylendiamine mit 2 bis 10 C-Atomen eingesetzt werden etwa Hexamethylendiamin, 1,3-Diaminopropan, 1,4-Diaminobutan. Geeignet ist auch Piperazin und Dipiperidylpropan.

Eine weitere geeignete Klasse von Diaminen leitet sich von den Di-merfettsäuren ab und enthält statt der Carboxylgruppen primäre Aminogruppen. Derartige Substanzen werden häufig Dimerdiamine genannt. Sie werden durch Nitrilbildung aus den dimerisierten Fettsäuren und anschließende Hydrierung erhalten.

Bezüglich des molekularen Aufbaus der den erfindungsgemäßen verträglichen Mischungen zugrunde liegenden Polyamide ist das Folgende auszuführen: Dem auf diesem Gebiete tätigen Fachmann ist es bekannt, daß monofunktionelle, difunktionelle und trifunktionelle Rohstoffe in einem bestimmten Verhältnis eingesetzt werden, um schmelzbare, d.h. nicht vernetzte Produkte zu erhalten. Es gilt hier das allgemeine Fachwissen der Polymerchemie. Danach kann beim Auftreten von Vernetzungen / Vergelungen durch Absenken des Anteils an trifunktionellen Komponenten (Trimerfettsäuren) und/oder Erhöhen des Gehalts an monofunktionellen Aminen oder Fettsäuren zu Rezepturen gelangt werden, die nicht zur Vergelung neigen. Das Molekulargewicht der erfindungsgemäßen Schmelzkleber läßt sich am besten durch GPC ermitteln.

Die erfindungsgemäßen Schmelzkleber haben überwiegend Amino-Endgruppen. Die Aminzahlen liegen in der Regel zwischen 2 und 15, vorzugsweise zwischen 4 und 10. Die Aminzahlen sind um 2, vorzugsweise um 4 Einheiten größer als die Säurezahlen.

Die Aminzahl gibt an wieviel mg KOH einem g der Substanz äquivalent sind. Sie wurde nach der DIN 16945, Blatt 1, unter folgenden Bedingungen bestimmt: Ca. 2,5 bis 6 g des zu untersuchenden Polyamid-Schmelzklebstoffes werden in einem Erlenmeyer-Kolben genau gewogen und in der Kälte mit 100 ml eines Gemisches aus Toluol/n-Butanol (gleiche Volumenanteile) versetzt. Die Probe wird unter Wärmen gelöst. Nach dem Abkühlen werden 50 ml Ethanol und 3 ml Brom-Cresol-grün hinzugefügt. Titriert wird mit einer 0,5 N Salzsäure.

Die Säurezahl gibt an, wieviel mg KOH erforderlich sind, um 1 g Substanz zu neutralisieren. Sie wird nach DIN 53402 folgendermaßen bestimmt: In einem Erlenmeyer-Kolben werden ca. 2,5 bis 6 g genau eingewogen und in 100 ml eines neutralisierten Gemisches von Toluol/n-Butanol (gleiche Volumenteile) in der Wärme gelöst. Nach dem Abkühlen der Lösung werden 50 Ethanol hinzugefügt sowie Phenolphthalein als Indikator. Titriert wird mit einer 0,5 N Kalilauge.

Füllstoffe werden im allgemeinen gebraucht, um das Volumen und/oder das Gewicht zu erhöhen. Im vorliegenden Fall trifft das auch für den Schmelzklebstoff zu. Zusätzlich wird jedoch noch die technische Verwendbarkeit verbessert, vor allem durch Erhöhung der Festigkeiten. Bei den erfindungsgemäßen Füllstoffen handelt es sich um Carbonate, also um Salze, die sich von der Kohlensäure ableiten, insbesondere um Calciumcarbonat. Es können aber auch Carbonate von anderen Metallen verwendet werden, wie z.B. Magnesium, Aluminium. Konkrete Beispiele für die Carbonate sind: Kreide, Magnesium-Hydroxocarbonat, Hydrotalcit (Dialuminium-Hexamagnesium-Carbonat-Hexadecahydroxid). Vorzugsweise sind die Füllstoffe beschichtet, z.B. mit ca. 2 Gew.-% an Calciumstearat oder carboxyliertem Polybutadien.
Die primäre Partikelgröße der Füllstoffe liegt im Bereich von 50 bis 0,05 µm, vorzugsweise im Bereich von 0,1 bis 0,06 µm. Die Bestimmung der Teilchengröße basiert auf Luftpermeations-Technik.

Dazu wird die Zeit bestimmt, die eine bestimmte Luftmenge bei einem bestimmten Druck benötigt, um durch eine Tablette von bestimmtem Durchmesser und bestimmter Dicke hindurchzuströmen, wobei die Tablette aus dem zu untersuchenden Stoff bei einem bestimmten Druck hergestellt wurde. Ein Vergleich mit den Durchströmzeiten von Stoffen mit bekannten Partikel-Durchmessern gibt Auskunft über den Partikel-Durchmesser des zu untersuchenden Stoffes.
Die Carbonate werden in einer Menge von bis zu 70 Gew.-%, insbesondere von 5 bis 50 Gew.-% und vorzugsweise von 20 bis 40 Gew.-% zugesetzt, bezogen auf den Polyamid-Schmelzklebstoff insgesamt.

Neben diesen beiden wesentlichen Komponenten, nämlich aminterminiertem Polyamid und Carbonat können die Schmelzklebstoffe fakultativ noch weitere Komponenten erhalten, insbesondere weitere Polymere wie Ethylen-Vinylacetat-Copolymerisate, klebrigmachende Harze, Weichmacher, Füllstoffe wie z.B. Microkohlkugeln aus Glas oder Kunststoffen, Stabilisatoren, Antioxidantien, Pigmente, Konservierungsmittel und Fungicide.

Das zusätzliche Polymere, z.B. das Ethylen-Vinylacetat-Copolymere kann das Polyamid bis zu einem Ausmaß von 40 %, bezogen auf das Polyamid ersetzen. Die Additive werden in einer Menge von 0,1 bis 5,0, vorzugsweise von 0,2 bis 1,5 Gew.-% zugesetzt, bezogen auf den Schmelzklebstoff insgesamt. Vorzugsweise setzt sich also der Polyamid-Schmelzklebstoff folgendermaßen zusammen:
a) 30 bis 95 %, insbesondere 60 bis 80 % Polyamid, welches teilweise ersetzt werden kann durch andere Polymere,
b) 5 bis 70 %, insbesondere 20 bis 40 % Carbonat und
c) 0,1 bis 5,0, insbesondere 0,2 bis 1,5 % sonstigen Additiven.

Die erfindungsgemäßen Schmelzklebstoffe lassen sich auf bekannte Art und Weise herstellen. So können die Carbonate mit Hilfe von beheizbaren Knetern oder Extrudern in fertige Polyamid-Schmelzklebstoffe eingearbeitet werden. Normalerweise geht man folgendermaßen vor: Der Schmelzklebstoff wird bei 160 bis 180 °C aufgeschmolzen. Zu der Schmelze wird der Füllstoff unter Rühren in kleinen Portionen zugegeben. Nach der Homogenisierung von Schmelze und Füllstoff wird der Stabilisator z.B. Irganox 1010 zugegeben und ebenfalls homogenisiert. Vor dem Austrag wird noch zweckmäßigerweise evakuiiert. Das fertige Produkt hat eine Dichte von ca. 1,3 g/cm³.

Um die maximale Mischungstemperatur festzustellen, empfiehlt es sich anhand von DSC-Messungen festzustellen, ab wann sich das Carbonat zersetzt bzw. schmilzt. Für das Hydrotalcit C 300 liegt diese Temperatur bei etwa 210 °C, für das Carbonat Winnofil liegt sie darüber. Um eine Verfärbung bei diesen hohen Temperaturen zu vermeiden, sollte man einen Stabilisator zusetzen, z.B. Irganox 1010. Weiterhin sollte man sich auch an der Verarbeitungstemperatur der Polyamide orientieren.

Die erfindungsgemäßen Schmelzklebstoffe sind auch im geschmolzenen Zustand lagerstabil. So setzt sich nur sehr wenig an Füllstoff ab, wenn man den Schmelzklebstoff 60 Stunden bei 170 °C lagert.

Obwohl ein Viskositätsanstieg mit dem Zusatz der Carbonate verbunden ist, sind doch die erfindungsgemäßen Schmelzklebstoffe nahezu wie üblich zu verarbeiten. Z.B. wird eine Verklebung entsprechend den DIN-Normen 53282 und 53539 durchgeführt.

Die erfindungsgemäßen Schmelzklebstoffe führen zu einer höheren Schälfestigkeit auf Metallen und zu einer größeren Beständigkeit gegenüber Petrolat. Ein weiterer Vorteil ist die im Vergleich zu ungefülltem Polyamid günstigere Wasserdampfdurchlässigkeit, d.h. eine geringere.

Aufgrund dieser positiven Eigenschaften der erfindungsgemäßen Schmelzklebstoffe eignen sie sich besonders zum Verkleben von Metallen untereinander sowie mit Kunststoffen, insbesondere mit Polyolefinen und Polyestern sowie Polyvinylchlorid (PVC). Viele Anwendungen liegen im Bereich der Elektro-Industrie, insbesondere beim Verkleben von Schichtenmantelkabeln. Konkrete Anwendungen sind: Lichtwellenleiterkabel und Energiekabel.

Die Erfindung wird nun anhand von Beispielen im einzelnen erläutert:

### Beispiele

**A) Verwendete Polyamide**
   a) Macromelt 6797 (Fa. Henkel KGaA): Hierbei handelt es sich um einen aminterminierten Polyamid-Schmelzklebstoff auf der Basis von Dimerfettsäure mit einer Amin-Zahl von max. 10,0 und einer Säurezahl von max. 3,0.
   b) Macromelt 6239 (Fa. Henkel KGaA): Hierbei handelt es sich um einen aminterminierten Polyamid-Schmelzklebstoff auf der Basis von Dimerfettsäure mit einer Amin-Zahl von 5,0 bis 10,0 und einer Säurezahl von max. 2,0.
   c) Macromelt 22-247 (Fa. Henkel KGaA): Hierbei handelt es sich um einen aminterminierten Polyamid-Schmelzklebstoff auf der Basis von Dimerfettsäure mit einer Amin-Zahl von 5,0 bis 10,0 und einer Säurezahl von max. 1,0.
   d) Macromelt 6735 (Fa. Henkel KGaA): Hierbei handelt es sich um einen Polyamid-Schmelzklebstoff auf der Basis von Dimerfettsäure mit einer Amin-Zahl von 4,0 bis 10,0 und einer Säure-Zahl von max. 2,0.
   e) Macromelt 6238 (Fa. Henkel KGaA): Hierbei handelt es sich um einen säureterminierten Polyamid-Schmelzklebstoff auf der Basis von Dimerfettsäure mit einer Amin-Zahl von max. 2,0 und einer Säure-Zahl von 6,0 bis 12,0.
**B) Verwendete Füllstoffe**
   a) Winnofil SPTB: CaC0₃ mit Stearat gecoatet, Fa. ICI Resins,
   b) Hydrotalcit C 300: basisches Mg-Al-Carbonat, Fa. Giulini,
   c) Fortimax "M", heute Winnofil FXM: CaC0₃ mit carbox. Polybutadien, gecoatet, Fa. ICI Resins,
   d) Omyacarb 4 BG: Kreide, Fa. Omya GmbH.
   e) Socal U1R: Kreide, Fa. Solvay.
**C) Herstellung der modifizierten Schmelzklebstoffe**
   Die Ansätze der Versuchsreihen wurden alle im Thermoblock bei etwa 180 bis 200 °C hergestellt. Das Polyamide wurde vorgelegt und der Füllstoff langsam zugegeben. Das Mischen dauert etwa 0,5 bis 2,0 Stunden. Die modifizierten Schmelzklebstoffe haben ein hellbraunes, caramelartiges Aussehen.
**D) Verklebungen**
   Als Substrate wurden Folien aus Kupfer mit einer Dicke von 0,2 mm und Folien aus Aluminium mit einer Dicke von 0,3 mm verwendet. Die Substratoberflächen wurden mit Isopropanol sorgfältig gereinigt. Der Klebstoff wurde mit einer Schichtdicke von ca. 0,4 bis 0,7 mm aufgetragen. Die Substrate wurden mit einem Druck von max. 10 bar innerhalb von 2 Minuten bei 200 °C verklebt.
Bei den vorgehend gennanten Bezeichnungnen "Macrowelt", "Winnofil", "Fortimax", "Omyacarb", "Socal" handelt es sich um eingetragene Wasenzeichen bzw Handels namen der genannten Lieferfirmen.
**E) Messungen**
   Nach einer Lagerzeit von mindestens 24 Stunden bei ca.25 °C und ca. 60 % relative Luftfeuchtigkeit wurden die Proben folgendermaßen untersucht:
   a) Erweichungspunkt in °C nach ASTM E 28.
   b) Schälfestigkeit in N/cm nach DIN 53282 und DIN 53539 Verfahren C.
   c) Dichte in g/cm³ nach ASTM D 792.
   d) Petrolatbeständigkeit in % nach DIN 57472/VDE 0472.
   e) Spottest: Dazu wird der Schmelzklebstoff auf ein Substrat gegeben und nach 24 Stunden per Hand wieder entfernt. Die dafür notwendige Kraft wird subjektiv durch Noten von 0 bis 15 angegeben:
   0 gibt einen ungenügenden niedrigen Kraftaufwand an, 15 einen sehr hohen.

Außerdem wurde f) die Schmelzviskosität in mPas bei 180 und 200 °C nach ASTM D 3236 bestimmt.

Bei den nachfolgend genannten Bezeichnungnen "Macrowelt", "Winnofil", Fortimax", "Omyacarb", "Socal", handelt es sich um Warenzeichen bzw. Handelsnamen der unter A) bis B) genannten Firmen.

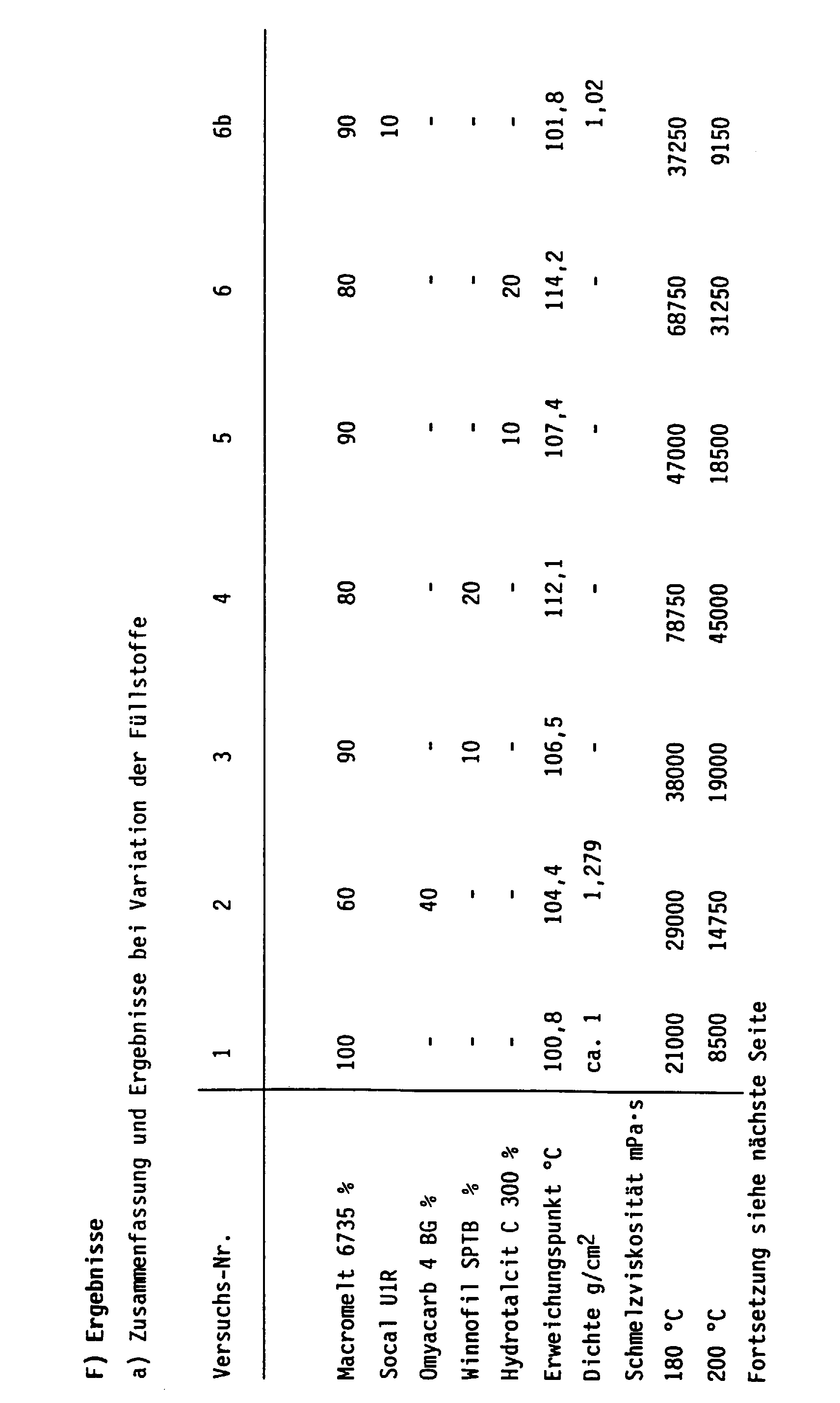

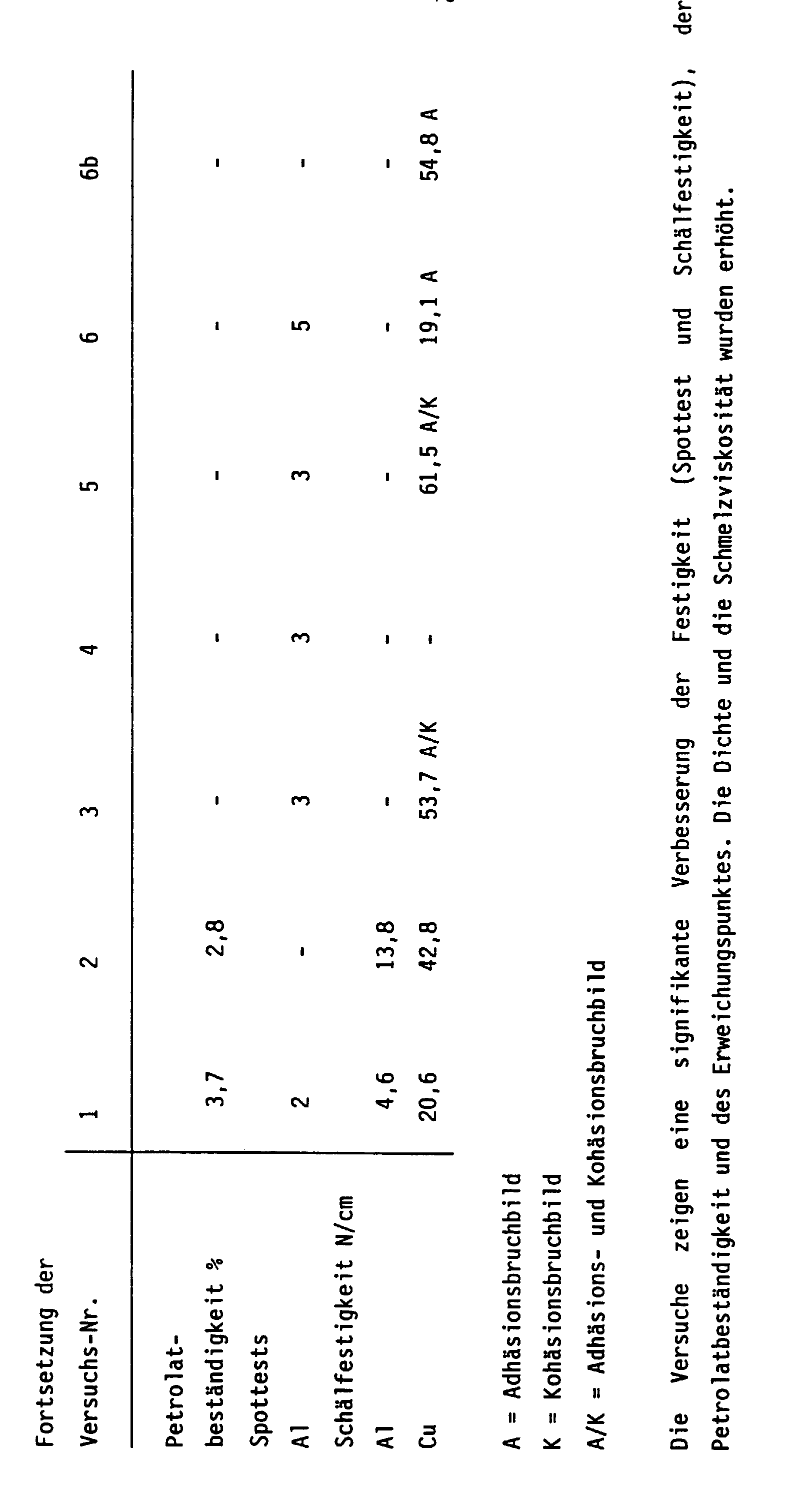

b) Zusammensetzung und Ergebnisse bei Zusatz eines Füllstoffes und eines Weichmachers

| Versuchs-Nr. | 7 | 8 | 9 | 10 |
|---|---|---|---|---|
| Macromelt 6735 % | 90 | 80 | 85 | 70 |
| Ketjenflex 8¹⁾ % | - | - | 5 | - |
| Fortimax "M" % | 10 | 20 | 10 | 30 |
| Erweichungspunkt °C | 105,4 | 108,4 | 92,8 | 98,1 |
| | | | 98,7 | 114,5 |
| Schmelzviskosität mPas | | | | |
| 180 °C | 27000 | 44000 | 19700 | 105333 |
| 200 °C | 13000 | 20550 | - | 49200 |
| Spottests | | | | |
| Cu | 15 | 14 | 14 | 13 |
| Schälfestigkeit N/cm | | | | |
| Cu | 63,5 A/K | 83,5 A/K | 30,7 A | |
| Al | - | 11,6 A | | |

| | | | | |
|---|---|---|---|---|
| ¹⁾ Ketjenflex 8 ist ein Weichmacher auf der Basis von p-Toluolsulfonsäureamid der Fa. AKZO AG. | | | | |

Die Wirkungen der Füllstoff-Zugabe werden bestätigt (Vergleiche Versuche 7 bis 10 mit Versuch 1). Der Weichmacher verringert die Schmelzviskosität.

c) Zusammensetzung und Ergebnisse bei Variation der aminterminierten Polyamide

| Versuchs-Nr. | 11 | 12 | 13 | 14 | 15 | 16 |
|---|---|---|---|---|---|---|
| Macromelt 6239 % | 80 | 100 | - | - | - | - |
| Macromelt 22-247 % | - | - | 80 | 100 | - | - |
| Macromelt 6797 % | - | - | - | - | 80 | 100 |
| Fortimax "M" % | 20 | - | 20 | - | 20 | - |
| Schmelzviskosität mPas | | | | | | |
| 180 °C | - | - | - | - | 11775 | 4267 |
| 190 °C | 77500 | 26250 | 62500 | 21000 | - | - |

| Spottests | | | | | | |
|---|---|---|---|---|---|---|
| Cu | 12 | 8 | 11 | 8 | 15 | 10 |
| PE | 5 | 2 | 2 | 1 | 0 | 0 |
| Schälfestigkeit N/cm Cu | 31,7 A | 26,7 A | 36,0 A | 17,2 A | 82,9 K | 60,8 K |

Alle aminterminierten PA-Schmelzklebstoffe zeigen Verbesserungen der Festigkeit und Erhöhung der Viskosität beim Zusatz des Füllstoffes.

d) Zusammensetzung und Ergebnisse bei Zusatz von Füllstoffen (Kreide) zu säureterminierten und zu aminterminierten PA-Schmelzklebstoffen

| Versuchs-Nr. | 17 | 18 | 19 | 20 |
|---|---|---|---|---|
| Macromelt 6735 % | 60 | 100 | - | - |
| Macromelt 6238 % | - | - | 100 | 60 |
| Omyacarb 4 BG % | 40 | - | - | 40 |
| Erweichungspunkt °C | 104,4 | 100,8 | 138,3 | 139,9 |
| Viskosität (mPas): | | | | |
| 180 °C | 29000 | 21150 | 7967 | 21750 |
| 200 °C | 14750 | 8550 | 3800 | 11250 |
| Schälfestigkeiten (N/cm) | | | | |
| Cu | 42,8 A/K | 20,6 A | 38,3 A/K | 13,5 A |

Nur in aminterminierten PA-Schmelzklebstoffen ist eine Verbesserung der Festigkeit zu beobachten, bei säureterminierten PA-Schmelzklebstoffen eine Verschlechterung.

## Patentansprüche

1. Polyamid-Schmelzklebstoff mit Füllstoff, dadurch gekennzeichnet, daß das Polyamid auf der Basis von dimerisierter Fettsäure eine um mindestens 2 Einheiten höhere Amin- als Säurezahl hat und der Füllstoff ein Carbonat ist, wobei die Säurezahl nach DIN 53402 und die Aminzahl nach DIN 16945, Blatt 1 zu bestimmen ist.

2. Polyamid-Schmelzklebstoff dadurch gekennzeichnet, daß er aus
a) 30 bis 95 % Polyamid,
b) 5 bis 70 % Carbonat und
c) 0,1 bis 5 % sonstigen Additiven besteht.

3. Polyamid-Schmelzklebstoff nach Anspruch 1 oder 2, dadurch gekennzeichnet, daß der Füllstoff ein Calciumcarbonat ist.

4. Polyamid-Schmelzklebstoff nach mindestens einem der Ansprüche 1, 2 oder 3, dadurch gekennzeichnet, daß der Füllstoff feinkörnig ist.

5. Polyamid-Schmelzklebstoff nach mindestens einem der Ansprüche 1, 2, 3 oder 4, dadurch gekennzeichnet, daß das Polyamid eine um mindestens 4 Einheiten höhere Aminzahl als Säurezahl hat.

6. Verwendung des Polyamid-Schmelzklebstoffes nach mindestens einem der Ansprüche 1 bis 5 zum Verkleben von Metallen.

7. Verwendung nach Anspruch 6, dadurch gekennzeichnet, daß die Metalle mit Kunststoffen verklebt werden.

8. Verwendung nach Anspruch 6 oder 7, gekennzeichnet durch Verklebungen an Schichtenmantelkabeln.

9. Verwendung nach Anspruch 8, gekennzeichnet durch Verklebungen an einem Lichtwellenleiter- und Energiekabel.

10. Verwendung nach Anspruch 7, dadurch gekennzeichnet, daß die Metalle mit Polyolefinen, Polyestern und PVC verklebt werden.

## Claims

1. A polyamide hotmelt adhesive containing a filler, characterized in that the polyamide based on dimerized fatty acid has an amine value higher by at least 2 units than its acid value and the filler is a carbonate, the acid value being measured in accordance with DIN 53 402 and the amine value in accordance with DIN 16 945, sheet 1.

2. A polyamide hotmelt adhesive, characterized in that it consists of
a) 30 to 95% of polyamide,
b) 5 to 70% of carbonate and
c) 0.1 to 5% of other additives.

3. A polyamide hotmelt adhesive as claimed in claim 1 or 2, characterized in that the filler is a calcium carbonate.

4. A polyamide hotmelt adhesive as claimed in at least one of claims 1, 2 or 3, characterized in that the filler is a fine-particle filler.

5. A polyamide hotmelt adhesive as claimed in at least one of claims 1, 2, 3 or 4, characterized in that the amine value of the polyamide is higher by at least 4 units than its acid value.

6. The use of the polyamide hotmelt adhesive claimed in at least one of claims 1 to 5 for bonding metals.

7. The use claimed in claim 6, characterized in that the metals are bonded to plastics.

8. The use claimed in claim 6 or 7 for bonding cables with multilayer sheaths.

9. The use claimed in claim 8, characterized by the bonding of optical cables and power cables.

10. The use claimed in claim 7, characterized in that the metals are bonded to polyolefins, polyesters and PVC.

## Revendications

1. Colle à fusion en polyamide avec charge,
caractérisée en ce que
• le polyamide à base d'acide gras dimérisé possède un indice d'amine supérieur d'au moins deux unités à son indice d'acide
• la charge est un carbonate, l'indice d'acide étant déterminé selon DIN 53 402 et l'indice d'amine selon DIN 16 945, feuillet 1.

2. Colle à fusion en polyamide,
caractérisée en ce qu'elle se compose de
a) 30 à 95 % de polyamide,
b) 5 à 70 % de carbonate, et
c) 0,1 à 5,0 %, d'autres additifs.

3. Colle à fusion en polyamide selon les revendications 1 ou 2,
caractérisée en ce que
la charge est un carbonate de calcium.

4. Colle à fusion en polyamide selon au moins l'une des revendications 1, 2 ou 3,
caractérisée en ce que
la charge est à grains fins.

5. Colle à fusion en polyamide selon au moins l'une des revendications 1, 2, 3 ou 4,
caractérisée en ce que
le polyamide a un indice d'amine supérieur d'au moins quatre unités à son indice d'acide.

6. Utilisation de la colle à fusion en polyamide selon au moins l'une des revendications 1 à 5 pour le collage des métaux.

7. Utilisation selon la revendication 6,
caractérisée en ce qu'
on colle des métaux avec des matières synthétiques.

8. Utilisation selon la revendication 6 ou 7,
caractérisée
par des collages sur des câbles cuirassés à plusieurs couches.

9. Utilisation selon la revendication 8,
caractérisée
par des collages sur un câble à fibres optiques et un câble énergétique.

10. Utilisation selon la revendication 7,
caractérisée en ce qu'
on colle des métaux avec des polyoléfines, des polyesters et du PVC.
